Europäisches Patentamt

European Patent Office

Office européen des brevets

(11) Veröffentlichungsnummer: **0 106 834**
**A2**

(12) **EUROPÄISCHE PATENTANMELDUNG**

(21) Anmeldenummer: 83890151.0

(22) Anmeldetag: 07.09.83

(51) Int. Cl.³: **E 21 C 7/08**
**F 16 L 27/08, F 16 L 39/04**
**E 21 C 35/22**

(30) Priorität: 09.09.82 AT 3382/82

(43) Veröffentlichungstag der Anmeldung:
25.04.84 Patentblatt 84/17

(84) Benannte Vertragsstaaten:
BE CH DE FR GB LI SE

(71) Anmelder: VOEST-ALPINE Aktiengesellschaft
Friedrichstrasse 4
A-1011 Wien(AT)

(72) Erfinder: Wrulich, Herwig
Haldenweg 4
A-8740 Zeltweg(AT)

(72) Erfinder: Schöffmann, Franz, Dipl.-Ing.
Niederungsweg 12
A-8704 Leoben(AT)

(72) Erfinder: Maier, Wilfried
Pfaffendorfersiedlung 94
A-8740 Zeltweg(AT)

(74) Vertreter: Haffner, Thomas M., Dr. et al,
Patentanwaltskanzlei Dipl.-Ing. Adolf Kretschmer Dr.
Thomas M. Haffner Schottengasse 3a
A-1014 Wien(AT)

(54) Anordnung für die Zuführung einer unter Druck stehenden Flüssigkeit zu einem rotierenden Maschinenteil.

(57) Für die Zuführung von unter Druck stehender Kühlflüssigkeit zu Austrittsöffnungen in einem Schrämkopf ist eine axiale Zuführungsbohrung (3) vorgesehen, welche in einen Verteilerraum mündet. Es sind radiale, in den Verteilerraum mündende Kanäle (11) vorgesehen, welche zu den Austrittsöffnungen an der Peripherie des rotierenden Schrämkopfes führen. Der Verteilerraum ist als die axiale Bohrung (3) koaxial umgebender stirnseitig geschlossener Raum ausgebildet, dessen Mantel ortsfest ist. An diesen Ringraum schließen in Achsrichtung der Bohrung (3) versetzt wenigstens zwei radiale Bohrungen (9, 10) in entgegengesetzter radialer Richtung an. Der Schrämkopf ist dichtend am drehfesten Mantel des Ringraumes geführt.

./...

Croydon Printing Company Ltd.

EP 0 106 834 A2

FIG.1

- 1 -

## Anordnung für die Zuführung einer unter Druck stehenden Flüssigkeit zu einem rotierenden Maschinenteil

Die Erfindung bezieht sich auf eine Anordnung für die Zuführung einer unter Druck stehenden Flüssigkeit, insbesondere von Kühlwasser, zu einem rotierenden Maschinenteil, insbesondere einem Schrämkopf, bei welcher die Flüssigkeit über eine axiale ortsfeste Bohrung einem Verteilerraum zugeführt ist und über radiale in den Verteilerraum mündende Kanäle zu Austrittsöffnungen an der Peripherie des rotierenden Maschinenteiles geführt ist. Insbesondere bei Schrämköpfen ist es bereits bekannt, im Inneren des Schrämkopfes Kanäle vorzusehen, an welche Austrittsdüsen für die Besprühung der Meißel mit Kühlwasser anschließen. Die Wasserzuführung erfolgt bei derartigen Schrämköpfen über ein an den Schrämarm angeschlossenes axiales Rohr, welches in einen mit dem Schrämkopf rotierenden Verteilerraum mündet. Eine derartige Ausbildung ist beispielsweise der AT-PS 359 453 zu entnehmen. An diesen Verteilerraum sind radiale Kanäle und bei der bekannten Ausführung sich axial erstreckende Ringräume angeschlossen, über welche das Kühlwasser zu den Austrittsdüsen geführt ist. Nachteilig bei dieser bekannten Konstruktion ist die Tatsache, daß sie bei hohen Zuführungsdrücken Dichtheitsprobleme aufweist und daß es bei einer derartigen Ausbildung nicht möglich ist, in einfacher Weise eine Versorgung der Düsen einzelner Sektoren des Umfanges des Schrämkopfes getrennt voneinander zu ermöglichen. Bei hohen Zuführungsdrücken kommt es neben der Beanspruchung der Dichtflächen im besonderen dann, wenn einzelne Sektoren des Schrämkopfes mit Sprühwasser versorgt werden und im Zuge der Umdrehung des Schrämkopfes die Wasserversorgung wieder abgestellt wird, zu hohen Belastungen der Dichtungen sowie zu hoher mechanischer Beanspruchung der Bauteile für die Wasserzuführung.

Die Erfindung zielt nun darauf ab, eine konstruktiv einfache, für hohe Zuführungsdrücke geeignete Wasserzuführung zu schaffen, mit welcher mit geringem konstruktiven Aufwand eine Sektorsteuerung für die Zuführung der unter Druck stehenden Flüssigkeit ermöglicht wird, ohne daß bei den bei einer derartigen Sektorsteuerung auftretenden Spitzenbelastungen in den Druckleitungen die Dichtheit der Anordnung gefährdet wird. Zur Lösung dieser Aufgabe besteht die Erfindung im wesentlichen darin, daß der Verteilerraum als die axiale Bohrung koaxial umgebender stirnseitig geschlossener, zylindrischer Ringraum ausgebildet ist, dessen Mantel ortsfest angeordnet ist, daß an den Ringraum in wenigstens einer Axialebene in Achsrichtung versetzt wenigstens zwei radiale Bohrungen in entgegengesetzter radialer Richtung anschließen, und daß der rotierende Maschinenteil dichtend am drehfesten Mantel des Ringraumes geführt ist. Der Verteilerraum steht somit zum Unterschied von der bekannten Ausführung ebenso wie die axiale Zuführung fest und es läßt sich das Zuführungsrohr in einem derartig ortsfesten, den Verteilerraum bildenden Bauteil leichter auch bei hohen Drücken abdichten. Dadurch, daß an den Ringraum, welcher von einem koaxialen zylindrischen Mantel begrenzt ist, in wenigstens einer Axialebene in Achsrichtung versetzt wenigstens zwei radiale Bohrungen in entgegengesetzter radialer Richtung anschließen, läßt sich die Belastung des Zuführungsrohres vergleichmäßigen und es läßt sich eine Ausbildung verwirklichen, bei der die resultierenden hydrostatischen Druckkräfte, welche auf das Zuführungsrohr wirksam werden, keine radiale Komponente oder nur sehr geringe radiale Komponenten aufweisen, so daß der dichte Sitz des Zuführungsrohres und die Abdichtung desselben gegenüber dem Ringraum nicht gefährdet ist. An diesen Ringraum schließen nun Bohrungen des rotierenden Maschinenteiles in radialer Richtung an, welche je nach Ausgestaltung und Konstruktion während einer gesamten Umdrehung um 360° oder über einen Teilbereich dieser Umdrehung mit den radialen Bohrungen des zylindrischen Ringraumes fluchten. Auf diese Weise läßt sich ohne konstruktive Schwierigkeiten eine

- 3 -

Wasserzuführung zu einzelnen Sektoren der Umfangsfläche oder über den gesamten Umfang des Schrämkopfes verwirklichen.

Die Ausbildung ist hiebei erfindungsgemäß vorzugsweise so getroffen, daß der zylindrische Ringraum von einer das die axiale Bohrung aufweisende Zuführungsrohr übergreifenden Büchse begrenzt ist, daß die axiale Bohrung als Sackbohrung ausgebildet ist und über wenigstens eine radiale Durchbrechung in den Ringraum mündet und daß der stirnseitig geschlossene Endbereich des Zuführungsrohres dichtend in der Stirnseite der Büchse angeordnet ist. Dadurch, daß die axiale Bohrung als Sackbohrung ausgebildet ist und unter Umlenkung der zugeführten Flüssigkeit über radiale Durchbrechungen in den Ringraum mündet, ergibt sich eine weitere Verringerung der Belastung des Zuführungsrohres, da die bei einer Sektorsteuerung auftretenden hohen Druckimpulse durch diese mehrfache Umlenkung der Flüssigkeit in der Zuführung in ihrer Auswirkung auf das den koaxialen Ringraum durchsetzende Zuführungsrohr vergleichmäßigt werden, was wiederum eine Entlastung der Dichtung mit sich bringt.

Vorzugsweise ist die Ausbildung so getroffen, daß in einer Axialebene des Zuführungsrohres wenigstens drei radiale Durchbrechungen in der Büchse vorgesehen sind, wobei eine in eine radiale Richtung weisende Bohrung in Achsrichtung des Zuführungsrohres gesehen vorzugsweise mittig zwischen den in die andere radiale Richtung weisenden Bohrungen angeordnet ist. Durch die Anordnung einer Bohrung, welche in eine radiale Richtung weist, zwischen den in die andere radiale Richtung weisenden Bohrungen läßt sich der zu beiden Seiten des Zuführungsrohres wirksame Druck weiter vergleichmäßigen und weitgehend kompensieren, so daß auch durch diese Maßnahme eine Belastung des Zuführungsrohres, welche ein Ausweichen des Zuführungsrohres aus der axialen Richtung zur Folge hätte, gering gehalten wird, wodurch wiederum die Sicherstellung der Dichtheit bei hohen Zuführungsdrücken weiter verbessert ist.

Für den Austritt der zugeführten Flüssigkeit aus dem Ringraum in die Bohrungen des rotierenden Maschinenteiles münden vorzugsweise die radialen Bohrungen der Büchse in sich zumindest über einen Teil des Umfanges derselben erstreckende Ringnuten. Je nach dem Zentriwinkel, über welchen sich die Ringnuten erstrecken, läßt sich auf diese Weise eine ununterbrochene Wasserzufuhr zu den Austrittsdüsen an der Peripherie des Maschinenteiles oder aber eine Sektorsteuerung, bei welcher im Falle eines Schrämkopfes der Austritt des Kühlwassers lediglich in demjenigen Bereich erfolgt, in welchem die Meißel in Eingriff mit dem abzubauenden Gestein stehen, verwirklichen, wobei wiederum zur Vergleichmäßigung der auftretenden Belastungen die Ausbildung vorzugsweise so getroffen ist, daß wenigstens zwei radiale Durchbrechungen des axialen Zuführungsrohres in Achsrichtung des Zuführungsrohres versetzt und vorzugsweise in der gleichen Axialebene angeordnet sind. Im Hinblick auf Wasserzuführungsdrücke von beispielsweise über 100 bar kann die Ausbildung in vorteilhafter Weise so getroffen sein, daß die radialen Durchbrechungen der Büchse gegenüber den radialen Durchbrechungen des Zuführungsrohres in Umfangsrichtung versetzt und vorzugsweise in voneinander verschiedenen Radialebenen angeordnet sind, so daß im besonderen bei einer Sektorsteuerung die Druckbelastung der Wasserzuführungsanordnung weiter vergleichmäßigt wird. Im gleichen Sinne ist es vorteilhaft, wenn die Umfangsflächen der an die in eine radiale Richtung weisenden Bohrungen der Büchse angeschlossenen Ringnuten gleich der oder den Umfangsfläche(n) der an die in die andere radiale Richtung weisenden Bohrung(en) der Büchse angeschlossenen Ringnut(en) sind, da in diesem Falle der hydrostatische Druck zu beiden Seiten der Achse des Zuführungsrohres im wesentlichen gleichgehalten wird.

Für eine Sektorsteuerung ist es vorteilhaft, wenn die Ringnuten der Büchse sich über einen Zentriwinkel von 90° - 270°, vorzugsweise etwa 180°, erstrecken, wobei die Ausbildung der radialen Bohrungen der Büchse mit Ringnuten die Möglichkeit bietet, die Aufsteuerung und Absteuerung der Wasserzuführung ohne harte Durckimpulse durchzuführen. Zu diesem Zweck genügt es, wenn die Ringnuten an ihren Enden eine verringerte Breite aufweisen.

Die Erfindung wird nachfolgend anhand eines in der Zeichnung dargestellten Ausführungsbeispieles näher erläutert.

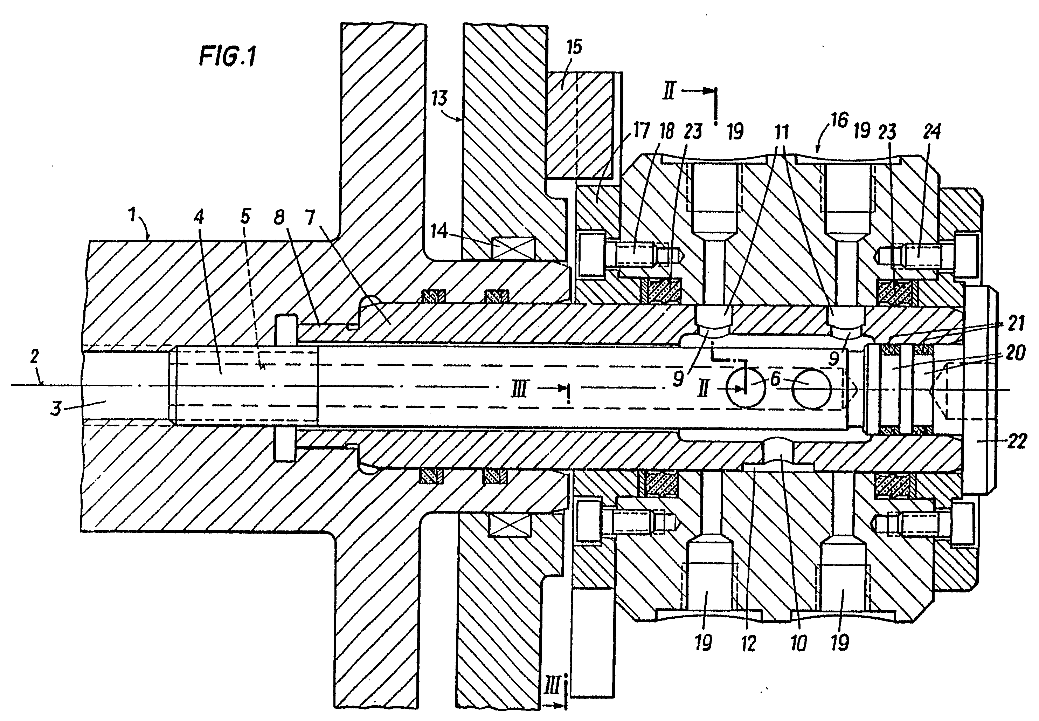

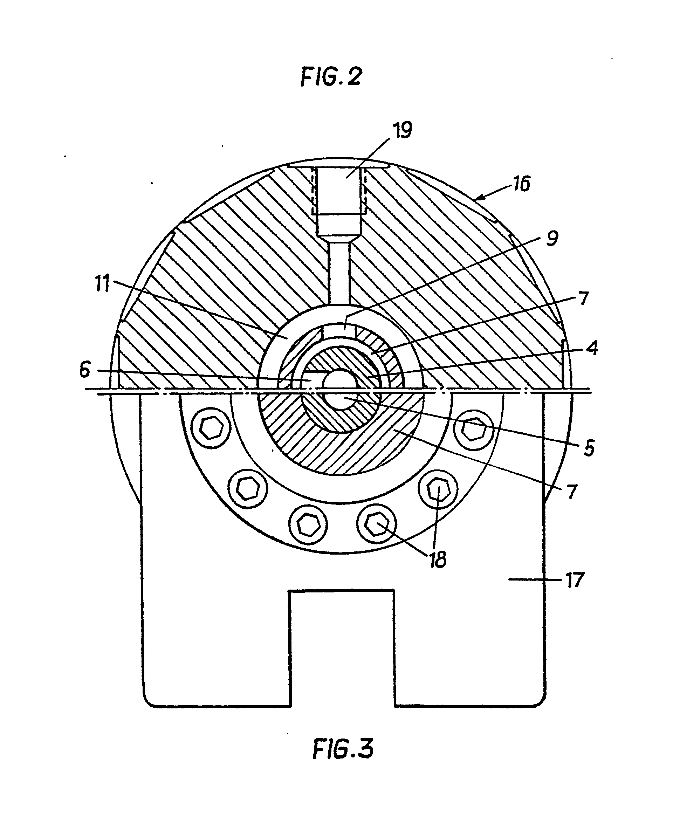

In dieser zeigen Fig. 1 einen Axialschnitt durch die erfindungsgemäße Anordnung, Fig. 2 einen Schnitt längs der Linie II-II der Fig. 1 und Fig. 3 eine Ansicht in Richtung des Pfeiles III der Fig. 1.

In Fig. 1 ist ein stillstehender Teil 1 vorgesehen, welcher beispielsweise mit einem nicht dargestellten Schrämarm starr verbunden sein kann. In diesem stillstehenden Teil 1 ist eine in der Rotationsachse 2 des rotierenden Bauteiles liegende Wasserzuführung vorgesehen, welche ein in eine Bohrung 3 des stillstehenden Teiles 1 eingeschraubtes Wasserzuführungsrohr 4 aufweist. Dieses Wasserzuführungsrohr weist eine axial gerichtete Sackbohrung 5 auf, an welche radiale Durchbrechungen 6 angeschlossen sind. Das Wasserzuführungsrohr 4 ist von einer Büchse 7 konzentrisch umgeben, welche über einen Sechskant 8 drehfest mit dem stillstehenden Teil 1 verbunden ist. Die Büchse 7 weist radiale Durchbrechungen 9 auf, welche in eine in der Axialebene, welche in Fig. 1 dargestellt ist, gemeiname Richtung weisen, sowie eine radiale Durchbrechung 10, welche in der gleichen Axialebene in der entgegengesetzten Richtung weist. An die radialen Durchbrechungen 9 bzw. 10 sind Ringnuten 11 und 12 angeschlossen, wobei die Ausbildung so getroffen ist, daß die Summe der Umfangsflächen der Ringnuten 11 etwa gleich der Umfangsfläche der Ringnut 12 ist.

- 6 -

Am stillstehenden Teil 1 ist ein Teil 13 drehbar gelagert, wobei die Lager mit 14 bezeichnet sind. Dieser drehende Teil 13 greift über Klauen 15 in den drehenden Maschinenteil 16 ein, wobei der das Gegenprofil zur Klaue 15 tragende Bauteil mit 17 bezeichnet ist und mit dem drehenden Maschinenteil 16 durch Schrauben 18 drehfest verbunden ist.

Der drehende Bauteil 16 weist nun radiale Bohrungen 19 auf, welche bei Umdrehung des Maschinenteiles 16 um die Achse 2 zumindest über einen Teil des Umfanges der Büchse 7 mit den Nuten 11 fluchten.

Stirnseitig ist die Anordnung dadurch abgedichtet, daß das Zuführungsrohr 4 Ringnuten 20 für die Aufnahme von Dichtungsringen 21 aufweist, wobei die Dichtungsringe 21 innerhalb des stirnseitigen Endes der Büchse 7 am Innenumfang derselben anliegen. Das Rohr 4 trägt einen verbreiterten Kopf 22, welcher nach Einschrauben des Rohres 4 in die Bohrung 3 an der Stirnseite der Büchse anliegt.

Der rotierende Maschinenteil, welcher beispielsweise ein Teil eines Schrämkopfes sein kann, liegt über Dichtungen 23 an der Außenseite der Büchse 7 an, wobei die Dichtungen durch die Schrauben 18 und 24 in ihrer Lage gehalten und unter Druckspannung gesetzt sind.

Im Schnitt nach Fig. 2 und in der Ansicht nach Fig. 3 sind die Bezugszeichen der Fig. 1 beibehalten.

Patentansprüche:

1. Anordnung für die Zuführung einer unter Druck stehenden Flüssigkeit, insbesondere von Kühlwasser, zu einem rotierenden Maschinenteil, insbesondere einem Schrämkopf, bei welcher die Flüssigkeit über eine axiale ortsfeste Bohrung (3) einem Verteilerraum zugeführt ist und über radiale in den Verteilerraum mündende Kanäle (11) zu Austrittsöffnungen (19) an der Peripherie des rotierenden Maschinenteils (16) geführt ist, dadurch gekennzeichnet, daß der Verteilerraum als die axiale Bohrung (3) koaxial umgebender stirnseitig geschlossener, zylindrischer Ringraum ausgebildet ist, dessen Mantel ortsfest angeordnet ist, daß an den Ringraum in wenigstens einer Axialebene in Achsrichtung versetzt wenigstens zwei radiale Bohrungen (9, 10) in entgegengesetzter radialer Richtung anschließen, und daß der rotierende Maschinenteil (16) dichtend am drehfesten Mantel des Ringraumes geführt ist.

2. Anordnung nach Anspruch 1, dadurch gekennzeichnet, daß der zylindrische Ringraum von einer das die axiale Bohrung (5) aufweisende Zuführungsrohr (4) übergreifenden Büchse (7) begrenzt ist, daß die axiale Bohrung (5) als Sackbohrung ausgebildet ist und über wenigstens eine radiale Durchbrechung (6) in den Ringraum (12) mündet und daß der stirnseitig geschlossene Endbereich des Zuführungsrohres (4) dichtend in der Stirnseite der Büchse (7) angeordnet ist.

3. Anordnung nach Anspruch 1 oder 2, dadurch gekennzeichnet, daß in einer Axialebene des Zuführungsrohres (4) wenigstens drei radiale Durchbrechungen (9, 10) in der Büchse (7) vorgesehen sind, wobei eine in eine radiale Richtung weisende Bohrung (10) in Achsrichtung des Zuführungsrohres (4) gesehen vorzugsweise mittig zwischen den in die andere radiale Richtung weisenden Bohrungen (9) angeordnet ist.

- 8 -

4. Anordnung nach einem der Ansprüche 1, 2 oder 3, dadurch gekennzeichnet, daß die radialen Bohrungen (9, 10) der Büchse (7) in sich zumindest über einen Teil des Umfanges derselben erstreckende Ringnuten (11, 12) münden.

5. Anordnung nach einem der Ansprüche 1 bis 4, dadurch gekennzeichnet, daß wenigstens zwei radiale Durchbrechungen (6) des axialen Zuführungsrohres (4) in Achsrichtung des Zuführungsrohres versetzt und vorzugsweise in der gleichen Axialebene angeordnet sind.

6. Anordnung nach einem der Ansprüche 1 bis 5, dadurch gekennzeichnet, daß die radialen Durchbrechungen (9, 10) der Büchse (7) gegenüber den radialen Durchbrechungen (6) des Zuführungsrohres (4) in Umfangsrichtung versetzt angeordnet sind.

7. Anordnung nach einem der Ansprüche 3 bis 6, dadurch gekennzeichnet, daß die Umfangsflächen der an die in eine radiale Richtung weisenden Bohrungen (9) der Büchse (7) angeschlossenen Ringnuten (11) gleich der oder den Umfangsfläche(n) der an die in die andere radiale Richtung weisenden Bohrung(en) (10) der Büchse (7) angeschlossenen Ringnut(en) (12) sind.

8. Anordnung nach einem der Ansprüche 1 bis 7, dadurch gekennzeichnet, daß die Ringnuten (11, 12) der Büchse (7) sich über einen Zentriwinkel von 90° - 270°, vorzugsweise etwa 180°, erstrecken.

9. Anordnung nach einem der Ansprüche 1 bis 8, dadurch gekennzeichnet, daß die Ringnuten (11, 12) an ihren Enden eine verringerte Breite aufweisen.

FIG.1

0106834

1/2

0106834

2/2

FIG.2

FIG.3